(19) Europäisches Patentamt
European Patent Office
Office européen des brevets

(11) EP 0 814 991 B1

(12) EUROPÄISCHE PATENTSCHRIFT

(45) Veröffentlichungstag und Bekanntmachung des Hinweises auf die Patenterteilung:
22.09.1999 Patentblatt 1999/38

(21) Anmeldenummer: 96909121.4

(22) Anmeldetag: 23.03.1996

(51) Int. Cl.$^6$: **B60T 13/72**, B60T 13/66

(86) Internationale Anmeldenummer:
PCT/EP96/01293

(87) Internationale Veröffentlichungsnummer:
WO 96/30246 (03.10.1996 Gazette 1996/44)

(54) **GEREGELTER FREMDANSTEUERBARER BREMSKRAFTVERSTÄRKER UND VERFAHREN ZU DESSEN BETRIEB**

EXTERNALLY CONTROLLABLE REGULATED BRAKE BOOSTER AND OPERATING METHOD THEREFOR

SERVOFREIN REGULABLE A ACTIONNEMENT EXTERIEUR ET SON PROCEDE DE FONCTIONNEMENT

(84) Benannte Vertragsstaaten:
**DE ES FR GB**

(30) Priorität: **31.03.1995 DE 19511845**

(43) Veröffentlichungstag der Anmeldung:
**07.01.1998 Patentblatt 1998/02**

(73) Patentinhaber:
**Continental Teves AG & Co. oHG**
**60488 Frankfurt (DE)**

(72) Erfinder: **BÖHM, Jürgen**
**D-65558 Oberneisen (DE)**

(56) Entgegenhaltungen:
**DE-A- 4 034 847          DE-A- 4 324 688**

**Beschreibung**

Die vorliegende Erfindung befaßt sich mit einem geregelten fremdansteuerbaren Bremskraftverstärker, der mittels eines Elektromagneten betätigt werden kann, welcher seinerseits in einem Regelkreis angeordnet ist, dessen Sollwert von einer übergeordneten Steuereinheit vorgegeben wird, sowie einem Verfahren zu dessen Betrieb.

Ein derartiger geregelter fremdansteuerbarer Bremskraftverstärker ist beispielsweise aus der DE-43 24 688 bekannt. Der Elektromagnet sitzt hierbei zentral im Steuergehäuse des Bremskraftverstärkers. Während eines fremdangesteuerten Betriebs des Bremskraftverstärkers ist der Elektromagnet nahezu ununterbrochen bestromt. Dies führt zu einer Erwärmung des Elektromagneten, die sich oberhalb eines bestimmten kritischen Bereichs in einer geringeren Leistung bemerkbar macht. Im Extremfall kann dies dazu führen, daß die Leistung des Elektromagneten nicht mehr ausreicht, den Bremskraftverstärker zu betätigen. Da der Elektromagnet an einer zentralen Stelle im Steuergehäuse des Bremskraftverstärkers angeordnet ist, ist eine ausreichende Kühlung des Elektromagneten nicht bzw. nur unter sehr hohem Aufwand möglich. Die Anordnung eines zusätzlichen Temperatursensors ist aus Platz- und Kostengründen wenig vorteilhaft.

Aufgabe der vorliegenden Erfindung ist es, Maßnahmen vorzuschlagen, die eine Überwachung der Magnettemperatur ermöglichen, ohne dazu eine zusätzliche Temperatursensorik zu benötigen.

Erfindungsgemäß sind dazu Mittel vorgesehen, die aus den Soll- und/oder Istwerten des Regelkreises eine der mittleren Temperatur des Elektromagneten proportionale Größe (Parameter) ermitteln. Dies hat den Vorteil, daß keine speziellen Temperaturfühler notwendig sind. Der Parameter kann während eines Regelvorgangs anhand der ohnehin vorhandenen und zu verarbeitenden Soll- bzw. Istwerte des Regelkreises ermittelt werden.

Vorzugsweise wird der Parameter in einer Signalverarbeitungseinheit geschätzt und an eine Überwachungseinheit weitergegeben. Die Signalverarbeitungseinheit führt aufgrund der Soll- und/oder Istwerte des Regelkreises eine Parameterschätzung durch. Die Überwachungseinheit meldet eine Fehlfunktion an eine übergeordnete Funktionseinheit, welche dann beispielsweise die Regelung oder die Steuerung aussetzen, einen Warnhinweis abgeben oder auf ähnliche, vorbestimmte Weise reagieren kann.

Es ist weiterhin vorgesehen, die Eingangswerte und/oder den geschätzten Parameter auf Plausibilität zu prüfen und den Parameter nur dann weiterzugeben, wenn die Plausibilitätsprüfung positiv ausfällt. Liegt der geschätzte Parameter außerhalb eines bestimmten, theoretisch möglichen Bereichs oder bewegen sich die Soll- bzw. Istwerte, die von der Signalverarbeitungseinheit verarbeitet werden, außerhalb eines Bereichs, in dem eine sinnvolle Schätzung zu erwarten ist, so wird ein negatives Plausibilitätsprüfungssignal an die Freigabeeinheit weitergegeben. Diese kann entweder den zuletzt ermittelten, als plausibel befundenen Wert an die Überwachungseinheit weitergeben, eine Fehlfunktionsmeldung abgeben oder auf andere geeignete Weise reagieren. Vorzugsweise werden die Istwerte von Strom und Spannung des Elektromagneten sowie der Weg des Ankers des Elektromagneten verarbeitet, was eine hohe Genauigkeit der nachfolgenden Schätzung gewährleistet, da insbesondere die Istwerte von Strom und Spannung relativ stark mit der Temperatur des Elektromagneten korrelliert sind.

Eine weitere vorteilhafte Möglichkeit besteht darin, die Soll- und Istwerte des Stroms des Elektromagneten zur Schätzung heranzuziehen. Dies ist möglich, wenn der Elektromagnet über einen Stromregler geregelt wird und ermöglicht es, die Schätzung mit einfachen Mitteln zu realisieren.

Es werden dabei Parameter $\hat{\Theta}$ für das statische und dynamische Verhalten des Stromregelkreises geschätzt. Aufgrund des Verhaltens dieser Parameter (geringer werdender statischer Verstärkungsfaktor, nachlassende Dynamik) werden Rückschlüsse auf die mittlere Temperatur $\vartheta$ des Elektromagneten gezogen.

Die Soll- und/oder Istwerte werden vorzugsweise in kurzen äquidistanten Zeitabständen abgetastet. Die Schätzung erfolgt über ein mathematisches parametrisches Modell des Elektromagneten, das in der Signalverarbeitungseinheit abgelegt ist und eine Korrelation zwischen den Ist- und/oder Sollwerten und den physikalischen Parametern des Elektromagneten ermöglicht. Der Parameter kann dabei entweder direkt die Temperatur oder eine andere temperaturabhängige Größe sein, z.B. ein temperaturabhängiger Widerstand.

Das erfindungsgemäße Verfahren kann sowohl zum Betrieb eines geregelten fremdangesteuerten Kraftverstärkers benutzt werden als auch allgemein zur Überwachung der Temperatur eines positionsproportional geregelten Elektromagneten. Es bietet den Vorteil, daß ohnehin vorhandene Soll- und/oder Istwerte verwendet werden, ohne daß störend in den Regelungsvorgang eingegriffen wird. Definierte statische Meßbedingungen sind nicht erforderlich. Auch hier kann ein Parameter, ein mittlerer Widerstand oder eine mittlere Temperatur anhand eines mathematischen parametrisierten Modells des Elektromagneten abgeschätzt werden.

Weitere Vorteile der Erfindung ergeben sich aus der nachfolgenden Beschreibung anhand zweier Beispiele. Dabei zeigen:

Fig. 1    eine proportionale Positionsregelung eines Elektromagneten,

Fig. 2    ein erstes erfindungsgemäßes Ausführungsbeispiel und

Fig. 3    ein zweites erfindungsgemäßes Ausführungsbeispiel

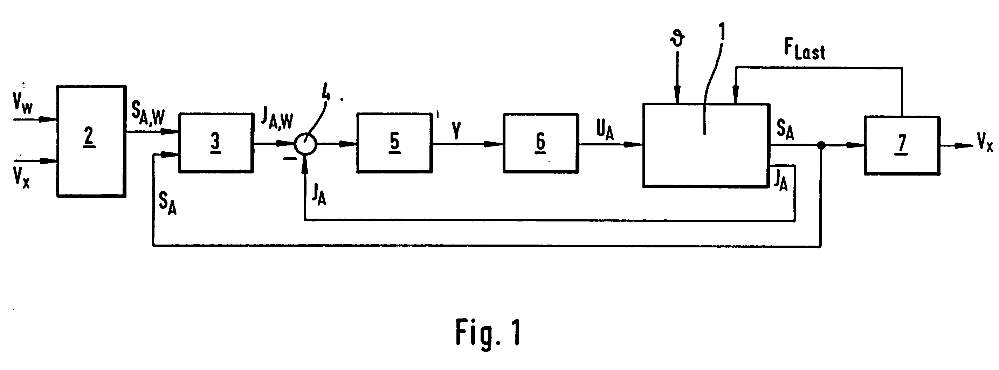

In Fig. 1 ist ein Beispiel für eine proportionale Positionsregelung eines Elektromagneten 1 in einem schematischen Diagramm gezeigt. Eine übergeordnete Funktionseinheit 2, die sowohl ein Teil eines Regelkreises als auch eine Steuereinheit sein kann, gibt einen Ankerwegsollwert $S_{A,W}$ an einen Positionsregler 3 des Elektromagneten 1 weiter. Dieser ermittelt aus einem Vergleich mit dem Ankerweg-Istwert $S_A$ einen Strom-Sollwert $I_{A,W}$ von dem in einem Summierer der Strom-Istwert $I_A$ abgezogen wird, und die sich ergebende Differenz einem Stromregler 5 zugeführt wird. Dessen Ausgangssignal Y wird in einem Verstärker 6 verstärkt und als Ankerspannung $U_A$ an den Elektromagnet 1 weitergegeben. Dabei stellt sich ein Ankerveg-Istwert $S_A$ und ein Strom-Istwert $I_A$ ein. Der Anker (mit dem Ankerweg-Istwert $S_A$) wirkt auf einen Bremskraftverstärker 7 ein, wobei eine Rückwirkungskraft $F_{Last}$ auf den Elektromagnet 1 als Störgröße zurückwirkt. Eine weitere Störgröße ist die auf den Elektromagnet 1 einwirkende Temperatur.

Die Betätigung des Bremskraftverstärkers 7 bewirkt, daß sich eine Fahrzeugverzögerung $V_x$ einstellt, die möglichst nahe an der von der übergeordneten Funktionseinheit 2 vorgegebenen Wunschverzögerung $V_w$ liegen soll.

Ausführungsbeispiele eines entsprechenden Bremskraftverstärkers 7 mit integriertem Elektromagnet 1 können der DE- 43 24 688 entnommen werden.

Für den zeitlichen Verlauf der am Elektromagnet 1 anliegenden Spannung gilt:

$$U_A(t) = R \cdot I_A(t) + \frac{d}{dt}(L(S_A(t)) \cdot I_A(t)$$

Man erkennt, daß eine Bestimmung des von der mittleren Temperatur des Elektromagneten abhängigen Spulenwiderstands R nur bei statischen Bedingungen nach dem Ohmschen Gesetz erfolgen kann, d.h. Induktivität $L = const$, Ankerweg $S_A = const$ und Strom $I_A = const$.

Während einer proportionalen Positionsregelung des Elektromagneten 1 ist daher keine Bestimmung des elektrischen Widerstands R des Elektromagneten 1 mittels des Ohmschen Gesetzes möglich, da durch die Regelung eine fortlaufende Aktivierung und Ansteuerung des Elektromagneten I mit variierenden Werten erfolgt.

Die permanente Bestromung des Elektromagneten 1 führt zudem zu einer mehr oder weniger signifikanten Temperaturerhöhung, was zur Beeinträchtigung der Funktion, zu einer Fehlfunktion oder bei fortlaufender Überschreitung einer kritischen Temperatur sogar zu einer Zerstörung des Elektromagneten 1 führen kann. Da sich, wie oben beschrieben, der elektrische Widerstand während eines Regelungsvorgangs nicht messen läßt, läßt sich hier die Temperaturabhängigkeit $R(\vartheta)$ nicht ausnutzen.

Führt man die zeitliche Ableitung der oben angegebenen Gleichung aus, so ergibt sich:

$$U_A(t) = R \cdot I_A(t) + L(S_A(t)) \cdot \dot{I}_A(t) + I_A(t) \cdot \frac{d}{dS_A} L(S_A(t)) \cdot \overline{S}_A(t)$$

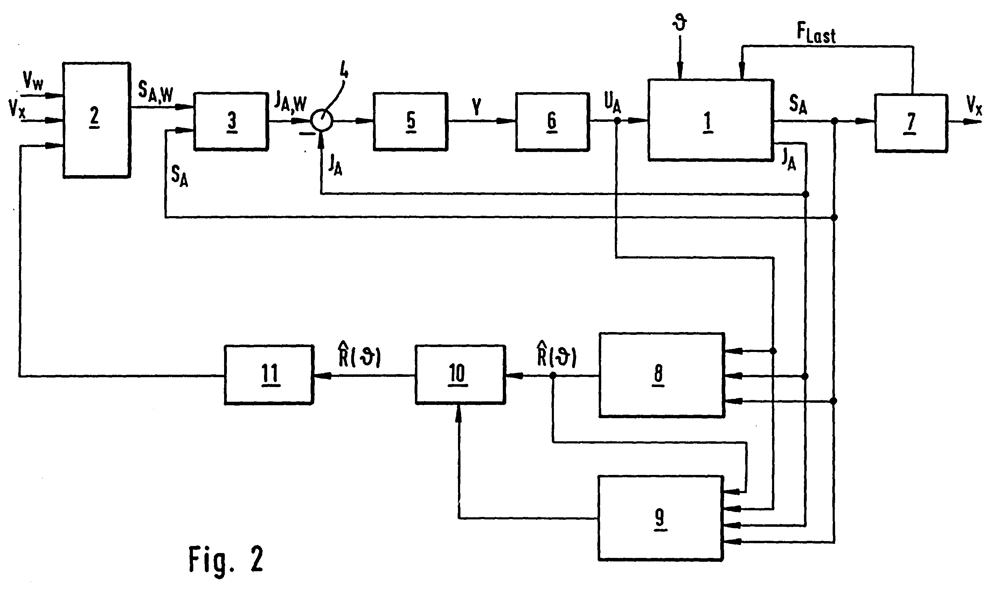

Hierbei lassen sich die Werte $U_A$, $I_A$ und $S_A$ direkt messen. Die zeitlichen Ableitungen $\dot{I}_A$ und $\dot{S}_A$ lassen sich aus dem zeitlichen Verlauf von $I_A$ und $S_A$ durch Differentiation ermitteln. Als Unbekannte verbleiben der gesuchte elektrische Widerstand R und die Induktivität $L(S_A(t))$ sowie deren Ableitungen nach $S_A$. Erfindungsgemäß ist vorgesehen, für $L(S_A(t))$ einen Modellverlauf anzunehmen. Der Spulenwiderstand R kann somit aufgrund der Spannungs- und Strommessungen während der aktiven Positonsproportionalen Regelung des Elektromagneten bestimmt bzw. geschätzt werden. Dies ist in Fig. 2 dargestellt.

Während des positionsproportional geregelten Betriebs des Elektromagneten 1 werden die Magnetsignale $S_A$ und $I_A$ in äquidistanten Zeitabständen gemessen und von einer Signalverarbeitungseinheit 8 ausgewertet. Die Signalverarbeitungseinheit 8 schätzt den temperaturabhängigen Widerstand der Magnetspule auf der Basis der gemessenen Signale ab. Die Grundlage dafür besteht in dem mathematischen parametrischen Modell für das elektrische Teilsystem des Elektromagneten 1, wie oben beschrieben. Dieses Modell beschreibt, z.B. in Form einer Differentialgleichung, den Zusammenhang zwischen den Prozeßmeßsignalen hinreichend genau und ermöglicht somit eine Korrelation zwischen den Signalen $I_A,S_A,U_A$ und den physikalischen Parametern des elektrischen Teilsystems. Der Spulenwiderstand ist einer dieser Parameter.

Die Signalverarbeitungseinheit 8 ermittelt aufgrund der gemessenen Magnetsignale $I_A,S_A,U_A$ einen Schätzwert $\hat{R}(\vartheta)$ für den aktuellen Spulenwiderstand durch die Minimierung eines im allgemeinen quadratischen Gütekriteriums. Dabei ist eine genaue Kenntnis der verbleibenden Modellparameter z.B. der positionsabhängigen Spuleninduktivität $L(S(t))$ nicht zwingend erforderlich. Die Gültigkeit des Schätzwertes $\hat{R}(\vartheta)$ und damit die Zulassung zur Temperaturüberwachung wird mittels einer Plausibilitätsprüfung festgestellt, die in der Plausibilitätsprüfungseinheit 9 durchgeführt wird. Stellt die Plausibilitätsprüfungseinheit 9 fest, daß die Schätzung gültige Werte liefert, so meldet sie dies an die Freigabeeinheit 10 weiter, die daraufhin den Schätzwert $\hat{R}$ ($\vartheta$) an die Temperaturüberwachungseinheit 11 weiterleitet. Diese stellt aufgrund der gültigen Widerstandswerte $\hat{R}$ ($\vartheta$) fest, ob sich die mittlere Temperatur des Elektromagneten noch innerhalb eines zulässigen Bereichs befindet und gibt eine entsprechende Statusmeldung an die übergeordnete Funktionseinheit 2. Zur Überwachung werden aus Vorversuchen ermittelte Kennlinien R($\vartheta$) benutzt. Eine Möglichkeit der Auswertung besteht darin, daß, sobald der geschätzte Widerstand $\hat{R}$ erstmalig oder für die Dauer eines vordefinierten Beobachtungszeitraums oberhalb des vordefinierten Grenzwiderstandes $R_{grenz} = R$ ($\vartheta_{Grenz}$)liegt, dies als Zeichen dafür angesehen wird, daß eine zuverlässige und sichere Funktion des Elektromagneten 1 nicht mehr gewährleistet werden kann. Eine entsprechende Statusmeldung erfolgt an die übergeordnete Funktionseinheit 2.

Das Ausführungsbeispiel nach Fig. 2 hat den Vorteil, daß keine spezielle Temperatursensorik erforderlich ist, sondern ausschließlich interne Magnetsignale benutzt werden. Eine fortlaufende Widerstands- bzw. Temperaturschätzung ist insbesondere auch bei aktiver positionsproportionaler Regelung des Elektromagneten 1 möglich, eine Bestimmung weiterer Modellparameter zusätzlich zu dem Widerstand R ist nicht zwingend erforderlich.

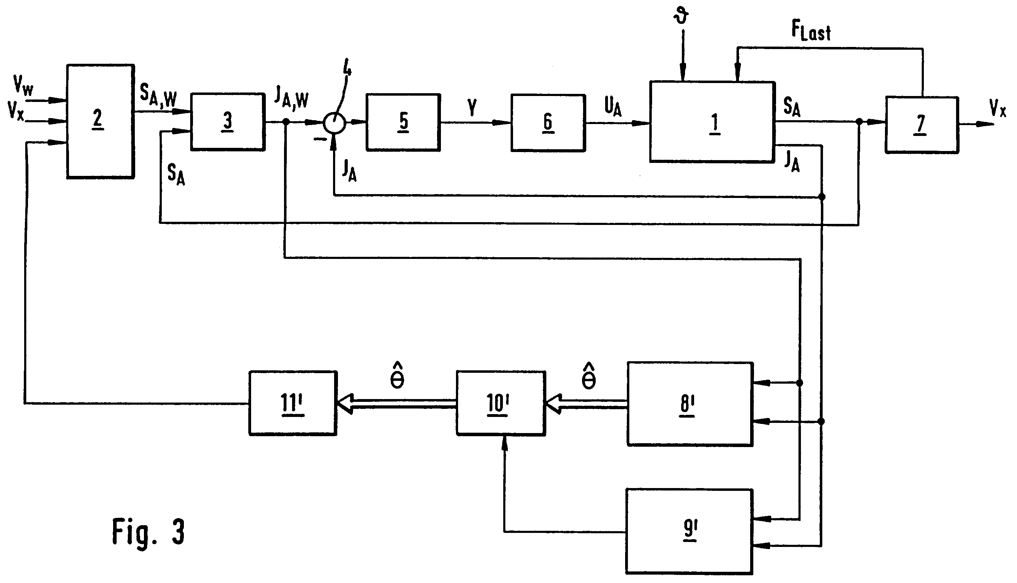

In Fig. 3 ist eine weitere Möglichkeit zur Temperaturüberwachung angegeben, die sich besonders gut realisieren läßt, wenn die aktive positionsproportionale Regelung des Elektromagneten 1 über einen Stromregelkreis (3,5,6,1) erfolgt. Hierzu ist lediglich die Messung des Strom-Sollwerts $I_{A,W}$ und des Strom-Istwerts $I_A$ in äquidistanten Zeitabständen erforderlich. Hierbei wird ausgenutzt, daß die maximale Ankerspannung $U_{A,max}$ für den Elektromagneten 1 durch die Bordspannung $U_{max}$ des Fahrzeugs begrenzt ist. Im Normalfall, d.h. wenn die Temperatur $\vartheta$ des Elektromagneten innerhalb des zulässigen Temperaturbereichs liegt, folgt der Strom-Istwert $I_A$, nach einem Verzögerungsverhalten dem Strom-Sollwert $I_{AW}$. Der statische Verstärkungsfaktor des Stromregelkreises (3,5,6,1) ist etwa eins.

Nimmt die Temperatur $\vartheta$ des Elektromagneten 1 zu, so ist aufgrund der damit verbundenen Erhöhung des Widerstands R eine größere Spannung $U_A$ erforderlich, um den vorgegebenen Sollstrom $I_{A,W}$ einzustellen. Da die Spannung $U_A$ durch die Bordspannung $U_{max}$ nach oben begrenzt ist, nimmt mit zunehmendem Spulenwiderstand R der maximal einstellbare Strom $I_A$ ab. Liegt der geforderte Strom-Sollwert $I_{A,W}$ als Stellgröße des übergeordneten Positionsreglers 3 oberhalb des Maximalstroms, so kann die Regelgröße $I_A$ dem vorgegebenen Sollstrom $I_{A,W}$ (Führungsgröße) nicht mehr folgen. Dies kann als eine Änderung des statischen und dynamischen Verhaltens des Stromregelkreises (5,6,1) aufgefaßt werden. Die Bestimmung der Parameter des betrachteten Regelkreises erfolgt anhand der oben genannten Meßsignale durch die

Minimierung eines im allgemeinen quadratischen Gütekriteriums. Grundlage ist dabei wiederum ein mathematisches parametrisches Modell, z.B. in Form von Differentialgleichungen, welches das statische und dynamische Verhalten des Stromregelkreises (Zusammenhang zwischen Sollstrom und Iststrom) hinreichend genau beschreibt.

Anhand der Parameteränderung kann festgestellt werden, ob der Stromregelkreis (5,6,1) noch ordnungsgemäß arbeitet oder ob aufgrund einer Überschreitung der zulässigen Magnettemperatur $\vartheta$ eine Fehlfunktion vorliegt. Die Signalverarbeitungseinheit 8' ermittelt dabei einen Schätzvektor $\hat{\Theta}$ für die Parameter des Stromregelkreises, die von einer Freigabeeinheit 10' freigegeben werden, wenn eine Plausibilitätsprüfungeinheit 9' ein positives Plaussibilitätssignal abgibt. Eine Temperaturüberwachungseinheit 11' überprüft aufgrund der Parameter und/oder des zeitlichen Verhaltens der geschätzten Parameter des Parametervektors $\hat{\Theta}$ ob der Stromregelkreis noch ordnungsgemäß arbeitet oder ob aufgrund einer Überschreitung der zulässigen Magnettemperatur eine Fehlfunktion vorliegt und gibt eine ensprechende Statusmeldung an die übergeordnete Funktionseinheit 2 weiter.

Auch hier ist keine spezielle Temperatursensorik erforderlich, es werden ausschließlich interne und relativ einfach meßbare Signale verwendet. Die Funktionsüberwachung des Stromregelkreises im laufenden Betrieb erfordert kein spezielles Testsignal, die Überwachung ist fortlaufend möglich.

## Patentansprüche

1. Geregelter fremdansteuerbarer Bremskraftverstärker (7), der mittels eines Elektromagneten (1) betätigt werden kann, welcher seinerseits in einem Regelkreis (3,5,6,1) angeordnet ist, dessen Sollwert ($S_{A,W}$) von einer übergeordneten Funktionseinheit (2) vorgegeben wird, dadurch **gekennzeichnet**, daß Mittel vorgesehen sind, die aus den Soll- und/oder Istwerten ($I_A$, $S_A$, $I_{A,W}$, $U_A$) des Regelkreises einen der Temperatur ($\vartheta$) des Elektromagneten proportionalen Parameter ermitteln.

2. Bremskraftverstärker (7) nach Anspruch 1, dadurch **gekennzeichnet**, daß diese Mittel eine Signalverarbeitungseinheit (8,8'), die eine Parameterschätzung durchführt, und eine Überwachungseinheit (11,11') aufweisen.

3. Bremskraftverstärker (7) nach Anspruch 2, dadurch **gekennzeichnet**, daß die Mittel weiterhin eine Plausibilitätsprüfungseinheit (9,9') und eine Freigabeeinheit (10,10') aufweisen.

4. Bremskraftverstärker (7) nach Anspruch 2 oder 3, dadurch **gekennzeichnet**, daß die Signalverarbeitungseinheit (8) den Strom-Istwert ($I_A$), die Ankerspannung ($U_A$) und den Ankerweg-Istwert ($S_A$) des Elektromagneten (1) verarbeitet.

5. Bremskraftverstärker (7) nach Anspruch 2 oder 3, dadurch **gekennzeichnet**, daß die Signalverarbeitungseinheit (8') den Strom-Istwert ($I_A$) und den Strom-Sollwert ($I_{A,W}$) des Elektromagneten (1) verarbeitet.

6. Bremskraftverstärker (7) nach einem der vorhergehenden Ansprüche, dadurch **gekennzeichnet**, daß die Soll- und/oder Istwerte in kurzen Zeitabstanden abgetastet werden.

7. Bremskraftverstärker (7) nach einem der Ansprüche 2 bis 6, dadurch **gekennzeichnet**, daß in der Signalverarbeitungseinheit (8) ein mathematisches parametrisches Modell des Elektromagneten (1) gespeichert ist, welches eine Korrelation zwischen den Ist- und/oder Sollwerten und den physikalischen Parametern des Elektromagneten (1) ermöglicht.

8. Bremskraftverstärker (7) nach einem der Ansprüche 2 bis 6, dadurch **gekennzeichnet**, daß in der Signalverarbeitungseinheit (8') ein mathematisches parametrisches Modell für das statische und dynamische Verhalten des Stromregelkreises (5,6,1) gespeichert ist, welches den Zusammenhang zwischen Sollstrom ($I_{AW}$) und Iststrom ($I_A$) des Elektromagneten (1) hinreichend genau beschreibt.

9. Verfahren zur Überwachung der Temperatur ($\vartheta$) eines in einem Regelkreis (3,5,6,1) angeordneten, positionsproportional geregelten Elektromagneten (1), der mit einer Ankerspannung ($U_A$) und einem Ankerstrom ($I_A$) betrieben wird, um einen Ankerweg ($S_A$) einzustellen, dadurch **gekennzeichnet**, daß während einer Regelung zumindest zwei der Soll- und/oder Istwerte ($I_A$, $S_A$, $I_{A,W}$,$U_A$,) des Regelkreises (3,5,6,1) in kurzen Zeitabständen abgetastet werden und aus diesen Werten sowie deren zeitlichem Verhalten ein der Temperatur $\vartheta$ des Elektromagneten (1) proportionaler Parameter abgeschätzt wird.

10. Verfahren zum Betrieb eines geregelten fremdansteuerbaren Bremskraftverstärkers (7), der mittels eines in einem Regelkreis (3,5,6,1) angeordneten Elektromagneten (1) betätigt werden kann, dadurch **gekennzeichnet**, daß während einer Regelung zumindest zwei der Soll- und/oder Istwerte ($I_A$,$S_A$, $I_{A,W}$, $U_A$,) des Regelkreises (3,5,6,1) in kurzen Zeitabständen abgetastet werden und aus diesen Werten sowie deren zeitlichem Verhalten ein der Temperatur $\vartheta$ des Elektromagneten (1) proportionaler Parameter abgeschätzt wird.

11. Verfahren nach Anspruch 10, dadurch **gekennzeichnet**, daß aus den Werten der Ankerspannung ($U_A$), des Stromlstwerts ($I_A$) und des Ankerweg-Istwerts ($S_A$) als Parameter ein mittlerer Widerstand ($\hat{R}$) abgeschätzt wird.

12. Verfahren nach Anspruch 9 oder 10, dadurch **gekennzeichnet**, daß aus dem Strom-Istwert ($I_A$) und dem Strom-Sollwert ($I_{AW}$) als Parameter ein Parametervektor ($\hat{\Theta}$) geschätzt wird.

13. Verfahren nach einem der Ansprüche 9 bis 12, dadurch **gekennzeichnet**, daß die Schätzung anhand eines mathematischen parametrischen Modells des Elektromagneten (1) und/oder des Stromregelkreises ermittelt wird.

14. Verfahren nach einem-der Ansprüche 9 bis 13, dadurch **gekennzeichnet**, daß der Parameter ($\hat{R}$) bzw. der Parametervektor ($\hat{\Theta}$) ausgewertet und eine Temperaturinformation an eine übergeordnete Funktionseinheit (2) weitergegeben wird.

15. Verfahren nach einem der Ansprüche 9 bis 13, dadurch **gekennzeichnet**, daß parallel zur Schätzung eine Plausibilitätsprüfung durchgeführt wird, und der Parameter ($\hat{R}$) bzw. der Parametervektor ($\hat{\Theta}$) nur dann ausgewertet wird, wenn diese Prüfung positiv ausfällt.

16. Verfahren nach einem der Ansprüche 9 bis 15, dadurch **gekennzeichnet**, daß die Abtastung der Ist- und/oder Sollwerte in äquidistanten Abständen erfolgt.

17. Verfahren nach einem der Ansprüche 9 bis 16, dadurch **gekennzeichnet**, daß eine Fehlerstatusmeldung abgegeben wird, wenn der geschätzte Widerstand ($R(\vartheta)$) oder der Parametervektor ($\hat{\Theta}$) erstmalig oder für die Dauer eines vordefinierten Beobachtungszeitraums oberhalb eines vordefinierten Grenzwertes ($R_{grenz}$,$\hat{\Theta}_{Grenz}$) liegt.

## Claims

1. A controlled, independently operable brake force booster (7), which can be activated by means of an electromagnet (1) which is, for its part, positioned within a control circuit (3, 5, 6, 1), the nominal value ($S_{A,W}$) of which is preset by a superordinated function unit (2), characterized in that means are provided which determine, from the nominal and/or the actual values ($I_A, S_A, I_{A,W}, U_A$) of the control circuit, a parameter which is proportional to the temperature ($\vartheta$) of the electromagnet.

2. A brake force booster (7) as claimed in claim 1, characterized in that the means comprise a signal processing unit (8, 8') which carries out a parameter estimation, as well as a monitoring unit (11, 11').

3. A brake force booster (7) as claimed in claim 2, characterized in that the means additionally have a plausibility examination unit (9, 9') and a release unit (10, 10').

4. A brake force booster (7) as claimed in claim 2 or claim 3, characterized in that the signal processing unit (8) processes the actual current value ($I_A$), the armature voltage ($U_A$), and the armature travel actual value ($S_A$) of the electromagnet (1).

5. A brake force booster (7) as claimed in claim 2 or claim 3, characterized in that the signal processing unit (8') processes the actual current value ($I_A$) and the nominal current value ($I_{A,W}$) of the electromagnet (1).

6. A brake force booster (7) as claimed in any one of the preceding claims,
characterized in that the nominal and/or the actual values are scanned at short intervals of time.

7. A brake force booster (7) as claimed in any one of claims 2 to 6,
characterized in that a mathematical parametric model of the electromagnet (1) is stored in the signal processing unit (8) and makes possible a correlation between the actual and/or nominal values and the physical parameters of the electromagnet (1).

8. A brake force booster (7) as claimed in any one of claims 2 to 6,
characterized in that a mathematical parametric model of the static and dynamic behavior of the current control circuit (5, 6, 1) is stored in the signal processing unit (8') and describes, with sufficient precision, the relation between the nominal current ($I_{A,W}$) and the actual current ($I_A$) of the electromagnet (1).

9. A process of monitoring the temperature ($\vartheta$) of an electromagnet (1) which is arranged in a control circuit (3,5,6,1) and controlled in a position-proportional manner, which is operated with an armature voltage ($U_A$) and an armature current ($I_A$) in order to adjust an armature travel ($S_A$),
characterized in that, during a control, at least two of the nominal and/or the actual values ($I_A, S_A, I_{A,W}, U_A$) of the control circuit (3,5,6,1) are scanned at short intervals of time, and a parameter which is proportional to the temperature ($\vartheta$) of the electromagnet (1) is estimated from these values as well as their temporal behavior.

10. A process for the operation of a controlled, independently operable brake force booster (7) which can be activated by means of an electromagnet (1) arranged within a control circuit (3,5,6,1), characterized in that, during a control, at least two of the nominal and/or the actual values ($I_A, S_A, I_{A,W}, U_A$) of the control circuit (3,5,6,1) are scanned at short intervals of time, and a parameter which is proportional to the temperature ($\vartheta$) of the electromagnet (1) is estimated from these values as well as their temporal behavior.

11. A process as claimed in claim 10,
characterized in that an average resistance (R) is estimated from the values of the armature voltage ($U_A$), the current actual value ($I_A$), and of the armature travel ($S_A$) as parameters.

12. A process as claimed in claim 9 or claim 10,
characterized in that a parameter vector ($\hat{\Theta}$) is estimated as parameter from the current actual value ($I_A$) and the nominal current value ($I_{A,W}$).

13. A process as claimed in any one of claims 9 to 12, characterized in that the estimation is determined by means of a mathematical parametric model of the electromagnet (1) and/or of the current control circuit.

14. A process as claimed in any one of claims 9 to 13, characterized in that, the parameter ($\hat{R}$) or the parameter vector ($\hat{\Theta}$) is evaluated, and a temperature information is sent to a superordinated function unit (2).

15. A process as claimed in any one of claims 9 to 13, characterized in that a plausibility examination is carried out in parallel to the estimation, and the parameter ($\hat{R}$) or the parameter vector ($\hat{\Theta}$) is only evaluated if this examination is positive.

16. A process as claimed in any one of claims 9 to 15, characterized in that the scanning of the actual and/or nominal values is carried out at equidistant intervals.

17. A process as claimed in any one of claims 9 to 16, characterized in that an error status report is issued when the estimated resistance ($R(\vartheta)$) or the parameter vector ($\hat{\Theta}$) exceeds, for the first time, or for the duration of a previously defined period of time of observation, a previously defined limit value ($R_{grenz}$, $\hat{\Theta}_{grenz}$).

**Revendications**

1. Amplificateur de force de freinage (7), à commande extérieure et objet d'une régulation, qui peut être actionné au moyen d'un électro-aimant (1) qui est lui-même disposé dans un circuit de régulation (3, 5, 6, 1) dont la valeur de consigne ($S_{A,W}$) est préfixée par une unité de fonctionnement (2) prioritaire, caractérisé en ce qu'il est prévu des moyens qui, à partir des valeurs de consigne et/ou valeurs réelles ($I_A$, $S_A$, $I_{A,W}$, $U_A$) du circuit de régulation, déterminent un paramètre proportionnel à la température ($\vartheta$) de l'électro-aimant.

2. Amplificateur de force de freinage (7) suivant la revendication 1, caractérisé en ce que ces moyens comprennent une unité de traitement de signaux (8, 8'), qui exécute une estimation de paramètres, et une unité de surveillance (11, 11').

3. Amplificateur de force de freinage (7) suivant la revendication 2, caractérisé en ce que les moyens comprennent en outre une unité de contrôle de plausibilité (9, 9') et une unité d'autorisation (10, 10').

4. Amplificateur de force de freinage (7) suivant la revendication 2 ou 3, caractérisé en ce que l'unité de traitement de signaux (8) traite la valeur réelle de courant ($I_A$), la tension d'armature mobile ($U_A$) et la valeur réelle de course d'armature mobile ($S_A$) de l'électro-aimant (1).

5. Amplificateur de force de freinage (7) suivant la revendication 2 ou 3, caractérisé en ce que l'unité de traitement de signaux (8') traite la valeur réelle de courant ($I_A$) et la valeur de consigne de courant ($I_{A,W}$) de l'électroaimant (1).

6. Amplificateur de force de freinage (7) suivant l'une des revendications précédentes, caractérisé en ce que les valeurs de consigne et/ou valeurs réelles sont échantillonnées à de brefs intervalles de temps.

7. Amplificateur de force de freinage (7) suivant l'une des revendications 2 à 6, caractérisé en ce qu'un modèle mathématique paramétrique de l'électro-aimant (1) est rangé en mémoire dans l'unité de traitement de signaux (8), ce modèle mathématique paramétrique permettant une corrélation entre les valeurs réelles et/ou valeurs de consigne et les paramètres physiques de l'électro-aimant (1).

8. Amplificateur de force de freinage (7) suivant l'une des revendications 2 à 6, caractérisé en ce qu'un modèle mathématique paramétrique correspondant au comportement statique et dynamique du circuit de régulation de courant (5, 6, 1) est mémorisé dans l'unité de traitement de signaux (8'), ce modèle mathématique paramétrique décrivant d'une manière suffisamment précise la relation existant entre le courant de consigne ($I_{Aw}$) et le courant réel ($I_A$) de l'électro-aimant (1).

9. Procédé de surveillance de la température ($\vartheta$) d'un électro-aimant (1) à régulation proportionnelle de position, qui est disposé dans un circuit de régulation (3, 5, 6, 1) et qui est mis en action au moyen d'une tension d'armature mobile ($U_A$) et d'un courant d'armature mobile ($L_A$) afin de régler une course d'armature mobile ($S_A$), caractérisé en ce que, pendant une régulation, au moins deux des valeurs de consigne et/ou valeurs réelles ($I_A$, $S_A$, $I_{A,W}$, $U_A$) du circuit de régulation (3, 5, 6, 1) sont échantillonnées à de brefs intervalles de temps et, à partir de ces valeurs et du comportement de celles-ci dans le temps, un paramètre proportionnel à la température $\vartheta$ de l'électro-aimant (1) est estimé.

**10.** Procédé de l'opération d'un amplificateur de force de freinage (7) à commande extérieure et objet d'une régulation qui peut être actionné au moyen d'un électro-aimant (1) disposé dans un circuit de régulation (3, 5, 6, 1), caractérisé en ce que, pendant une régulation, au moins deux des valeurs de consigne et/ou valeurs réelles ($I_A$, $S_A$, $I_{A,W}$, $U_A$) du circuit de régulation (3, 5, 6, 1) sont échantillonnées à de brefs intervalles de temps et, à partir de ces valeurs et du comportement de celles-ci dans le temps, un paramètre proportionnel à la température $\vartheta$ de l'électro-aimant (1) est estime.

**11.** Procédé suivant la revendication 10, caractérisé en ce qu'une résistance moyenne (R) est estimée à partir des valeurs de la tension d'armature mobile ($U_A$), de la valeur réelle de courant ($I_A$) et de la valeur réelle de course d'armature mobile ($S_A$) en tant que paramètres.

**12.** Procédé suivant la revendication 9 ou 10, caractérisé en ce qu'un vecteur de paramètres ($\Theta$) est estimé à partir de la valeur réelle de courant ($I_A$) et de la valeur de consigne de courant ($I_{AW}$) en tant que paramètres.

**13.** Procédé suivant l'une des revendications 9 à 12, caractérisé en ce que l'estimation est déterminée à l'aide d'un modèle mathématique paramétrique de l'électro-aimant (1) et/ou du circuit de régulation de courant.

**14.** Procédé suivant l'une des revendications 9 à 13, caractérisé en ce que le paramètre (R) ou le vecteur de paramètres ($\Theta$) est analysé et une information de température est transmise à une unité de fonctionnement (2) prioritaire.

**15.** Procédé suivant l'une des revendications 9 à 13, caractérisé en ce que, parallèlement à l'estimation, un contrôle de plausibilité est exécuté et le paramètre ($\overline{R}$) ou le vecteur de paramètres ($\Theta$) n'est analysé que lorsque ce contrôle se révèle être positif.

**16.** Procédé suivant l'une des revendications 9 à 15, caractérisé en ce que l'échantillonnage des valeurs réelles et/ou des valeurs de consigne a lieu à des intervalles équidistants.

**17.** Procédé suivant l'une des revendications 9 à 16, caractérisé en ce qu'une indication de statut d'erreur est délivrée lorsque la résistance estimée ($R(\vartheta)$) ou le vecteur de paramètres ($\Theta$) est situé pour la première fois, ou pour la durée d'un intervalle de temps d'observation préfixé, au-dessus d'une valeur limite ($R_{grenz}$, $\Theta_{Grenz}$) préfixée.

Fig. 1

Fig. 2

EP 0 814 991 B1

$V_W$

$V_x$

**2**

$S_{A,W}$

**3**

$J_{A,W}$

$S_A$

4

**5**

$\gamma$

**6**

$U_A$

$J_A$

$\vartheta$

$F_{Last}$

**1**

$S_A$

$J_A$

**7**

$V_x$

$\hat{\Theta}$

$\hat{\Theta}$

**11'**

**10'**

**8'**

**9'**

Fig. 3